# FASCICULE DE BREVET EUROPEEN

(11) **EP 3 548 210 B1**
(45) Date de publication et mention de la délivrance du brevet: **06.07.2022**
(21) Numéro de dépôt: 16823306.2
(22) Date de dépôt: 30.11.2016
(51) Int. Cl.: B33Y 70/10, C22C 32/00, B28B 1/00, A61C 13/00, B33Y 10/00, B22F 10/20

(54) **ALLIAGE TITANE ZIRCONIUM ET SON MODE DE REALISATION PAR FABRICATION ADDITIVE**
TITAN-ZIRKONIUM-LEGIERUNG UND VERFAHREN ZUR HERSTELLUNG DAVON MITTELS GENERATIVER FERTIGUNG
TITANIUM-ZIRCONIUM ALLOY AND METHOD FOR THE PRODUCTION THEREOF BY MEANS OF ADDITIVE MANUFACTURING

(43) Date de publication de la demande: 09.10.2019
(73) Titulaire: Djemai, Abdelmadjid, 95170 Deuil La Barre (FR)
(72) Inventeur: FOUCHET, Jean-Jacques, 45700 Lombreuil (FR); DJEMAI, Abdelmadjid, 95170 Deuil La Barre (FR)
(74) Mandataire: IP Trust
(86) Numéro de dépôt international: PCT/FR2016/053155
(87) Numéro de publication internationale: WO 2018/100251

(56) Documents cités:
- WO-A1-2016/012399
- CN-A- 105 903 967
- FR-A1- 3 037 945
- US-A1- 2015 167 130
- Anonymous: "Titanium Alloy Grade Comparison Table", , 24 octobre 2016 (2016-10-24), XP055388087, Extrait de l'Internet: URL:https://web.archive.org/web/2016102405 3648/http://www.nan-long.com/Metal Steel Technology Summary/Titanium Alloy Grade Comparison Table.htm [extrait le 2017-07-05]
- Anonymous: "Zircone Y-TZP - Wikipédia", , 26 mars 2014 (2014-03-26), XP055388091, Extrait de l'Internet: URL:https://fr.wikipedia.org/w/index.php?t itle=Zircone_Y-TZP&oldid=102391223 [extrait le 2017-07-05]
- MICHAEL B. POMFRET ET AL: "Structural and Compositional Characterization of Yttria-Stabilized Zirconia: Evidence of Surface-Stabilized, Low-Valence Metal Species", ANALYTICAL CHEMISTRY, vol. 77, no. 6, 17 février 2005 (2005-02-17), pages 1791-1795, XP055388093, US ISSN: 0003-2700, DOI: 10.1021/ac048600u

## Description

### DOMAINE TECHNIQUE

Le titane pur et ses alliages ont reçu une attention considérable dans de nombreuses applications, y compris l'industrie médicale, en raison de leur résistance accrue, la résistance à la corrosion, et, surtout, leur biocompatibilité et leur osé intégration.

L'alliage duplex Ti6Al4V se compose de phases alpha et bêta, constitué de 6 pour cent d'aluminium et 4 pour cent de vanadium (Ti-64) et a été considéré comme le plus approprié car il possède des propriétés mécaniques renforcées par rapport au titane pur.

Cependant, l'alliage Titane a une valeur de dureté faible et une mauvaise résistance à l'usure et à l'oxydation, en particulier, là où le comportement tribologique est connu, comme dans les vannes et des connexions des broches.

Quand il est placé dans un environnement appauvri en oxygène, typiquement dans des implants dentaires ou osseux, il est susceptible de libérer des ions d'aluminium et de vanadium, qui sont considérés comme dangereux pour les fluides corporels.

Pour surmonter les problèmes de diffusion d'ions d'aluminium et de vanadium, les techniques actuelles travaillent sur le changement de la nature de la surface de cet alliage de titane en utilisant différentes techniques de génie de surface, par exemple le dépôt d'une couche de céramique de type zirconium.

Ce sont généralement des silicates inorganiques poly cristallins, des oxydes et des carbures. Ils sont de nature réfractaire, et possèdent une résistance élevée à la compression. Les Biocéramiques peuvent être subdivisées comme bio-inertes, bioactives, et en matériaux biodégradables.

La zircone qui se comporte comme la céramique, se décline en trois phases, monocliniques, cubes et tétragones, qui peuvent améliorer les propriétés finales des revêtements produits. Les céramiques bio-inertes comme la zircone maintiennent leurs propriétés physiques et mécaniques, même dans les milieux biologiques et les milieux hautement corrosifs. La zircone est très résistante à l'usure et supporte bien le stress induit par le durcissement par transformation.

L'application principale de la céramique de zircone dans le domaine médical est en prothèse totale de hanche (PTH), où elle est utilisée comme un alliage manteau duplex de la tête de l'implant en alliage titane type Ti6Al4V. Une autre application de la céramique de zircone est dans le domaine spatial, comme bouclier thermique dans les réacteurs d'avions et de satellites

De nombreuses études ont été faites sur la modification de surface du titane ou d'un alliage titane pour améliorer leurs propriétés de surface ou bien faire un mélange Titane Zircone pressé à haute température, nous citons les publications suivantes :
Y.Zhong et Al.« Characterization and thermal shock behavior of composite ceramic coating doped with ZrO2 particles on TC4 by micro arc oxidation",Applied Surface Science, 311, 158-163 (2014), Dépôt de couche ZrO2 par micro-arc sur des pièces en titane (TA6V), l'objectif recherché était d'augmenter la dureté du titane.
Patrik Stenlund et al.« osseointegration Enhancement by Zr doping of Co-Cr-Mo Implants Fabricated by Electron Beam Melting » Hiroaki al , Science direct (2015);l'ajout de 0,04% de zircone augmente l'oséointegration.
Y. Zhong et al.," Characterization and thermal shock behavior of composite ceramic coating doped with ZrO2 particles on TC4 by micro-arc oxidation", Applied Surface Science, 311, 158-163 (2014).
Keiichiro Tohgo et al., Shizuoka Univerdsity (Japon), "Fabrication of PSZ-Ti composites by spark plasma sintering and their mechanical properties", Materials Science & Engineering, A621, 166-172 (2015).
T.Fujii, K.Tohgo, H.Araki,K.Wakazono,M.Ishikura , Y.Shimamura,J.SolidMech.Mater.Eng.41699-1710 (2010).
N-R Park et al., "Fast low-temperature consolidation of a nanostructured 2Ti-ZrO2 composite for biomédical applications", Ceramics international, 40, 6311-6317 (2014).
Proceedings: Tohgo et al.," Progress of Composites" 2008 in Asia and Australasia - The 6th Asian-Australasian Conférence on Composite Materials, ACCM (2008).
Chien-Cheng Lin et al.," Effect of Yttria on Interfacial Reactions Between Titanium Melt and Hot-Pressed Yttria/Zirconia Composites at 1700°C", Université Chiao Tung (Taiwan), J.Am.Ceram.Soc.,91,2321-2327 (2008).
J. Cao et al., "Brazing ZrO2 ceramic to Ti-6Al-4V alloy using NiCrSiB amorphous filler foil": Interfacial microstructure and joint properties, Materials characterization 81, 85-91 (2013).

L'état de la technique peut être défini par les brevets ;
« Alliage binaire titane-zirconium pour implants chirurgicaux et procédé de production correspondant » déposé le 10 juin 1997par l'institut Straumann AG sous le numéro WO1997029624A2, dans cette réalisationle mélange Titane Zircone se fait par forgeage à chaud.
« Alliage a base d titane » déposé le 6 mai 2006par Igor Vasilievich Alsous le numéro WO2006123968A2
«Poudre d'oxyde mixte de titane et de zirconium» déposé le 20 décembre 2005 par Degussa,Kai Schumacher,Oswin Klotz,Uwe Dienersous le numéro WO2006067129A2
« Les produits de base pour la fabrication de matériaux céramiques » déposé le 28 janvier 1987 par Degussa Aktiengesellschaft sous le numéro EP0241647A2
« Le dioxyde de titane dopé » déposé le 29 mars 2000 parDEGUSSA AG sous le numéro EP1138632A1
« Titane coprécipités de dioxyde / dioxyde de silicium et de dioxyde de titane / zirconium coprécipités de dioxyde comme catalyseurs de polycondensation pour des polyesters et copolyesters » déposé le 2 janvier 1995 par AkzoNOBEL NV sous le numéro US5684116

Par ailleurs, la fabrication additive et pour certaines technologies additives précisément (SLM, EBM, SLA) sont des techniques d'intérêt pour la fabrication d'implants ou de prothèse puisqu'elles présentent plusieurs possibilités de contrôle de la géométrie, de la porosité, de l'inter connectivité et l'architecture 3D par des changements dans les paramètres de fabrication, citons les principaux paramètres pour la technologie de fusion laser sélective :
- la puissance des lasers
- la vitesse de scan
- le diamètre du spot
- la stratégie de parcours du laser
- le recouvrement entre deux points de fusion
- l'épaisseur des couches de la poudre

Le procédé de fusion laser sélective de poudre métallique en terminologie anglaise « Selective Laser Melting (SLM), SLM est un procédé utilisé pour la fabrication de composants complexes en trois dimensions à partir de poudres de métal, de céramique ou poudres polymère. La technologie est mature et déjà utilisée dans l'industrie aéronautique et le médical pour fabriquer des composants complexes présentant de hautes densités et homogénéité. Nous citons un des premiers brevets de l'institut Fraunhofer en Allemagne, déposé le 27 oct. 1997 sous le numéro WO1998024574A1, qui décrit le procédé SLM d'une façon plus précise. La dénomination SLM sera maintenue dans tout le texte du brevet.

Cette technique de fabrication n'apparaît pas adaptée pour la mise en forme d'un matériau comprenant à la fois de la céramique de zircone et un métal tel que le titane compte tenu de l'écart important existant entre les points de fusion des deux matériaux qui interdit a priori une fusion de chacun d'eux en étant exposés à une même température. Cependant, le document CN 105903967 A divulgue une telle technique.

Il existe donc un réel besoin de créer un matériau biocompatible, constitué d'un alliage de métal et de céramique, de mise en forme précise pour la réalisation de composants complexes et répondant aux exigences requises en termes de propriétés mécaniques.

### EXPOSE DE L'INVENTION

Pour remédier à ce problème, l'invention concerne un procédé de fabrication d'un matériau composite en alliage métallique et céramique, comprenant les étapes de :
▪ préparation d'un mélange homogène de poudre métallique et de poudre céramique, la granulométrie de la poudre métallique étant micrométrique et la granulométrie de la poudre céramique étant nanométrique,
focalisée qui vient fusionner sélectivement une partie d'un lit dudit mélange de poudre, dans lequel la poudre céramique est de la zircone stabilisée, ledit procédé étant caractérisé en ce que ladite zircone est de type zircone yttriée avec une concentration d'oxyde d'Yttrium comprise entre 11 et 30% en volume de la zircone.

Le procédé selon l'invention peut par ailleurs présenter l'une et/ou l'autre des caractéristiques suivantes :
- la poudre métallique comprend du titane pur ou un alliage en comprenant de type Ti6AIV4.
- la granulométrie de la poudre métallique est comprise entre 5 et 50 microns et la granulométrie de la poudre céramique est comprise entre 5 et 250 nm
- la source d'énergie focalisée est un spot laser
- le temps d'exposition d'une zone de fusion est inférieur à 5 secondes
- l'épaisseur du lit de poudre est comprise entre 5 et 50 microns
- la température de fusion est supérieure à 1650°C
- la proportion de poudre métallique est supérieure à 40% en volume et inférieure à 99,5% en volume.
- la proportion de poudre céramique est supérieure à 0.4% en volume et inférieure à 60% en volume.

L'invention concerne également un procédé de fabrication d'un objet d'une forme géométrique donnée, constitué d'un matériau fabriqué selon le procédé de l'une des revendications précédentes, comprenant les étapes de :
▪ en fonction de la forme géométrique à réaliser, préparation de tranches virtuelles de l'objet à réaliser d'épaisseur donnée suivant un axe de construction de l'objet,
   métallique et de poudre céramique, la granulométrie de la poudre métallique étant micrométrique et la granulométrie de la poudre céramique étant nanométrique,
▪ dépôt sur un substrat d'une couche du mélange homogène de poudre d'une épaisseur correspondant à celle de la tranche de la forme géométrique à réaliser
▪ exposition dudit mélange homogène de poudre de ladite première couche à une source d'énergie focalisée qui vient fusionner sélectivement une partie du lit dudit mélange de poudre aux emplacements correspondant à la tranche virtuelle à réaliser, par laquelle est obtenue une première tranche de la forme géométrique à réaliser, au sein de la première couche de mélange de poudre
▪ dépôt d'une n-ième couche de mélange de poudre sur la couche précédente incluant la tranche de l'objet réalisée à l'étape précédente, et exposition de la n-ième couche à la source d'énergie focalisée pour obtenir une n-ième tranche de la forme géométrique à réaliser au sein d'une n-ième couche de mélange de poudre
▪ répétition de l'étape précédente jusqu'à l'obtention de la forme géométrique à réaliser.

L'invention concerne également un objet biocompatible, tel qu'un implant ou une prothèse, réalisé par la mise en œuvre du procédé ci-dessus.

L'invention concerne également un objet de l'industrie automobile ou aéronautique réalisé par la mise en œuvre du procédé ci-dessus.

### Définitions

On appelle classiquement« composite », un matériau contenant à la fois une phase céramique et une phase métallique avec une matrice de base, ladite matrice est soit métallique et là on parle de CMM (Composite à Matrice Métallique), soit céramique et là on parle de CMC (Composite à Matrice Céramique).

Un produit est classiquement dit « fondu » lorsqu'il est obtenu par un procédé mettant en œuvre une phase de fusion de matières premières et une phase de solidification par refroidissement.

Un précurseur de ZrO₂, de Al₂O₃, de TiO₂ ou de Y₂O₃ est un composé capable de conduire à la formation de ces oxydes par un procédé comportant une fusion, puis une solidification par refroidissement.

« ZrO₂», « oxyde de zirconium » et «zircone» sont des synonymes. Lorsqu'il est fait référence à « ZrO₂», à l'oxyde de zirconium ou à la zircone, il y a lieu de comprendre (ZrO₂+ HfO₂). En effet, un peu de HfO₂, chimiquement indissociable du ZrO₂ et présentant des propriétés semblables, est toujours naturellement présent dans les sources de zircone à des teneurs généralement inférieures à 2%. Autrement dit, « ZrO₂+ HfO₂ » signifie ZrO₂ et les traces de HfO₂ naturellement présentes dans les sources de zircone.

Le « Point de fusion » indique une zone ou bassin sur le lit de poudre où le laser vient fondre la matière, on parle de « melting pool » dans la littérature anglaise.

### DESCRIPTION DES FIGURES

D'autres caractéristiques et avantages de l'invention apparaîtront encore à la lecture de la description qui va suivre et à l'examen des figures annexées dans lesquels :

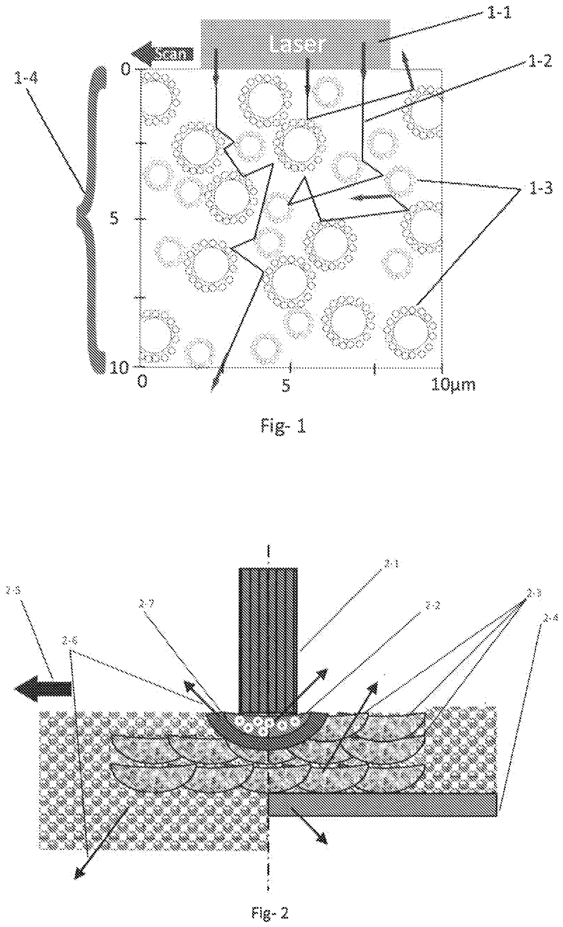

- la figure 1 représente schématiquement le passage de l'énergie de la fusion laser d'une épaisseur de 10 µm sur le lit de poudre selon l'invention.
- la figure 2 représente schématiquement en coupe les points de fusion laser et leur recouvrement selon l'invention.

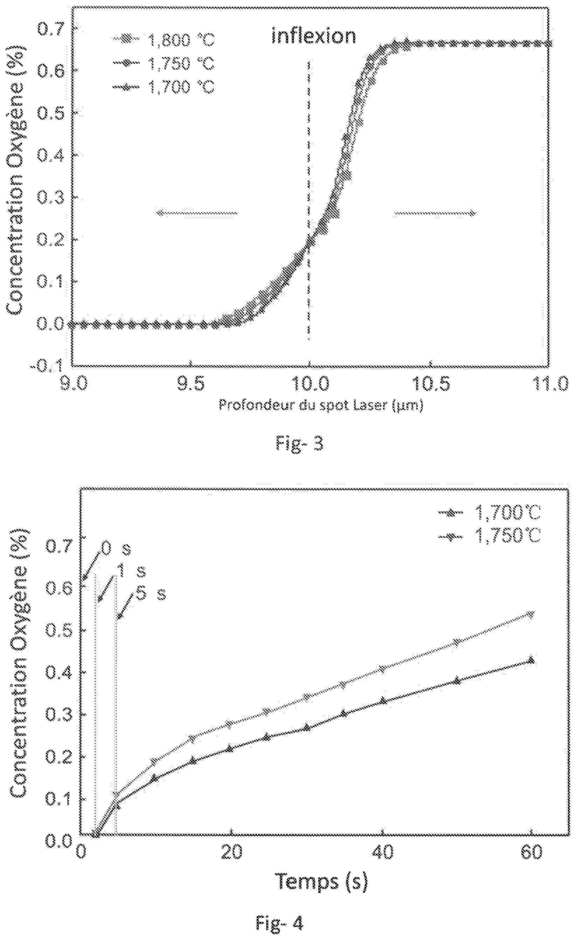

- la figure 3 représente la courbe de concentration de l'oxygène dans l'alliage Ti/ZrO₂ à différentes températures.
- la figure 4 représente la diffusion temporelle de l'oxygène dans l'alliage Ti/ZrO₂ selon l'invention.
- la figure 5 représente la corrélation entre la faction volumique de ZrO₂ et la dureté de l'alliage Ti/ZrO₂ selon l'invention
- la figure 6 est une image au MEB obtenue pour un matériau selon l'invention réalisé à partir de poudres de Ti6Al4V microscopiques et 5% de zircone nanoscopique

### DESCRIPTION DETAILLEE

La présente invention a pour but de créer un matériau de préférence biocompatible, constitué d'un alliage de métal et de céramique, de mise en forme précise pour la réalisation de composants complexes et répondant aux exigences requises en termes de propriétés mécaniques.

A cet effet, l'invention concerne généralement un procédé de fabrication d'un alliage métal-céramique par fabrication additive, comprenant principalement les étapes de :
- préparation d'un mélange homogène de poudre métallique et de poudre céramique, la granulométrie de la poudre métallique étant micrométrique et la granulométrie de la poudre céramique étant nanométrique,
- exposition dudit mélange à une source d'énergie focalisée qui vient fusionner sélectivement une partie d'un lit dudit mélange de poudre.

Afin qu'à la fois les particules de poudre métallique et les particules de poudre céramique entrent en fusion alors qu'elles sont exposées à la même température du spot de source d'énergie et qu'elles présentent des températures de fusion très différentes, l'invention prévoit une granulométrie de la poudre métallique comprise entre 1 et 200 microns, de préférence entre 5 et 50 microns et une granulométrie de la poudre céramique comprise entre 1 et 800 nm, de préférence entre 5 et 250 nm. Idéalement, la proportion de poudre métallique est supérieure à 40% en volume et inférieure à 99,5% en volume. De préférence, la proportion de poudre céramique est supérieure à 0.4% en volume et inférieure à 60% en volume.

Par ailleurs, de manière préférée, la source d'énergie focalisée est un spot laser programmé pour agir sur une zone de fusion durant un temps d'exposition inférieur à 5 secondes et de préférence supérieur à 10 ms, afin que cette zone de fusion atteigne ou dépasse une température de fusion de 1650°C.

Pour une application dans le domaine biomédical, la poudre métallique préférée est une poudre de titane pur ou un alliage en comprenant de type Ti6AIV4, et la poudre céramique préférée est une poudre de zircone, de préférence de type zircone stabilisée sous forme quadratique, de préférence de type zircone Yttriée (YSZ) avec une concentration d'oxyde d'Yttrium comprise entre 11 et 30% dans la zircone. L'ajout de la zircone dans le titane permet d'augmenter la dureté du matériau et la résistance à l'usure. Selon l'invention, la poudre céramique est de type zircone yttriée avec une concentration d'oxyde d'Yttrium comprise entre 11 et 30 % en volume de la zircone.

Etant donné que le matériau selon l'invention est généré par un procédé de fabrication additive, il est avantageux de le mettre en forme suivant une forme géométrique donnée, dans le même temps qu'il est crée.

A cet effet, en fonction de la forme géométrique à réaliser, on prépare des tranches virtuelles de l'objet à réaliser d'épaisseur donnée suivant un axe de construction de l'objet. Il est possible que cette forme inclue des zones poreuses permettant par exemple une croissance osseuse, ou permettant que l'objet final présente des propriétés mécaniques désirées.

On utilise un mélange homogène de poudre métallique micrométrique et de poudre céramique nanométrique que l'on dépose sur un substrat sous la forme d'une couche du mélange de poudre d'une épaisseur correspondant à celle de la tranche de la forme géométrique à réaliser.

On expose ensuite ledit mélange de poudre de ladite première couche au spot laser qui vient fusionner sélectivement une partie du lit dudit mélange de poudre aux emplacements correspondant à la tranche virtuelle à réaliser. Pour former une structure poreuse, le spot est déplacé pour définir un réseau de cellules unitaires interconnectées définissant une structure poreuse tel qu'il sera explicité dans la suite.

On obtient ainsi une première tranche de la forme géométrique à réaliser, au sein de la première couche de mélange de poudre.

On répète une opération de dépôt d'une n-ième couche de mélange de poudre sur la couche précédente incluant la tranche de l'objet réalisée à l'étape précédente, et d'exposition de la n-ième couche à la source d'énergie focalisée pour obtenir une n-ième tranche de la forme géométrique à réaliser jusqu'à l'obtention de la forme géométrique à réaliser.

Ce procédé selon l'invention permet l'obtention d'un objet biocompatible, tel qu'un implant ou une prothèse lorsque des poudres métalliques et céramiques biocompatibles sont utilisées.

Il permet d'obtenir des objets de l'industrie automobile ou aéronautique de grandes précisions et aux propriétés mécaniques intéressantes.

On détaille dans ce qui suit certains aspects du procédé selon l'invention en référence aux figures :
Mélange de poudres préféré notamment pour une application dans le domaine biomédical

Plus précisément, dans un mode de réalisation préféré pour une application dans le domaine biomédical, les poudres métalliques sont du titane pur ou un alliage de type Ti6AIV4 se composant de phases alpha et bêta, constitué de 6% d'aluminium et 4 % de vanadium.

Les poudres céramiques sont de type zircone Zr /zircone stabilisée/zircone yttriée ZrO₂/Y₂O₃ avec une concentration de l'oxyde d'yttrium 11,8%≤Y₂O₃ < 30%. La zircone existe sous l'une des trois formes cristallines (formes allotropiques), monoclinique, quadratique, cubique avec des températures de fusion respectives 1100 °C, 2300 °C, 2700 °C. Ces transformations s'accompagnent de variations de volume (dilatation de 3 à 5 % lors de la transformation quadratique-monoclinique). La température de frittage se situant vers 1450 °C, il est nécessaire de stabiliser la zircone dans l'une des structures haute température afin d'éviter une fragmentation lors du refroidissement. L'addition de quelques % de MgO, CaO, Y₂O₃ ou de CeO₂ conduit à ce résultat. Dans la présente invention Y₂O₃ est mise en œuvre pour stabiliser la zircone, Y-TZP : (zircone stabilisée sous forme quadratique par de l'oxyde d'Yttrium (Y₂O₃).

Les mélanges de poudre, selon l'invention, peuvent encore comporter une ou plusieurs des caractéristiques optionnelles suivantes :
- de préférence, la teneur en titane Ti ou d'un alliage Ti6AlV4 est supérieure à 40%, de préférence supérieure à 60 % et/ou, de préférence, inférieure à 99,50%, de préférence inférieure à 95,5 %.

Une poudre de titane pur ou d'un alliage Ti6AlV4 selon l'invention, peut encore comporter une ou plusieurs des caractéristiques optionnelles suivantes :

Une granulométrie inférieure à 70 µm, de préférence inférieure à 45 µm ; de préférence inférieure à 30 µm, de préférence inférieure à 10 µm, de préférence supérieure à 5 µm.

Dans un premier mode de réalisation particulier, la poudre de Zircone yttriée présente une granulométrie inférieure à 250 nm, de préférence inférieure à 130 nm, et/ou une taille médiane comprise entre 65 nm et 85 nm, et/ou une taille minimale supérieure à 30 nm ;
- dans un deuxième mode de réalisation particulier, la poudre de Zircone yttriée présente une granulométrie inférieure à 75 nm, de préférence inférieure à 70 nm, et/ou une taille médiane comprise entre 35 nm et 50 nm, et/ou une taille minimale supérieure à 15 nm, de préférence supérieure à 20 nm ;
- dans un troisième mode de réalisation particulier, la poudre de Zircone yttriée présente une granulométrie inférieure à 40 nm, de préférence inférieure à 35 nm, et/ou une taille médiane comprise entre 10 nm et 25 nm, et/ou une taille minimale supérieure à 3 nm, de préférence supérieure à 5 nm.
- dans un quatrième mode de réalisation particulier, la poudre de Zircone yttriée présente une granulométrie inférieure à 15 nm, de préférence inférieure à 10 nm, et/ou une taille médiane inférieure à 5 nm.

De préférence, la teneur en ZrO₂/ Y₂O₃ est supérieure à 0,4%, de préférence supérieure à 13,5% et/ou, de préférence, inférieure à 30,0%, de préférence inférieure à 60 % ; de préférence la teneur en Y₂O₃ est inférieure à 1,7%, de préférence inférieure à 1,6%, de référence inférieure à 1,5%, de préférence inférieure à 1,4%, de préférence inférieure à 1,3%, de préférence inférieure à 1,2%, de préférence inférieure à 1,1%, de préférence inférieure à 1,0%, de préférence inférieure à 0,9%, de préférence inférieure à 0,8%» de préférence inférieure à 0,5%, voire inférieure à 0,4% et/ou de préférence supérieure à 0,1% ;
- de préférence, la teneur en dioxyde de titane TiO₂issu de la réaction du titane avec l'oxygène apporté par Yttrium Y₂O₃ est inférieure à 0,4%, de préférence inférieure à 0,3%, de préférence encore inférieure à 0,2%, et/ou de préférence supérieure à 0,01%, de préférence supérieure à 0,1% ;
- de préférence, la teneur en Y₂O₃ est comprise entre 0,1% et 0,5% et la teneur en TiO₂ est comprise entre 0,1% et 0,2%,
- de préférence, la teneur en « autres oxydes » est inférieure à 1,5%, de préférence inférieure à 1 %, de préférence inférieure à 0,7%, de préférence inférieure à 0,5%, de préférence inférieure à 0,3%, de préférence inférieure à 0,2%, voire inférieure à 0,1%, les propriétés d'oxydation en sont avantageusement améliorées ;
- de préférence, les « autres oxydes » sont des impuretés ;
- de préférence, la teneur en HfO₂ est inférieure à 2,0 %, inférieure à 1 ,8 %, inférieure à 1,6 %, voire inférieure à 1,4 % ;

Dans un autre mode de réalisation, la teneur en Y₂O₃ est supérieure à 0,1%, supérieure à 0,2 %, supérieure à 0,3 %, supérieure à 0,4 %, voire supérieure à 0,5 %, supérieure à 0,6 %, ou supérieure à 0,7 %.

De manière préférée, le matériau composite titane-zircone contenant les deux composants titane et zircone selon l'invention
(i) est un alliage composite à matrice métallique (CMM) titane avec une proportion supérieure à 60 % en volume et une proportion de zircone inférieure à 30 % en volume mais supérieure à 0.5 % en volume, ou
(ii) est un alliage composite à matrice métallique (CMM) titane avec une proportion supérieure à 99 % en volume et une proportion de zircone inférieure à 1 % en volume mais supérieure ou égale à 0.04 % en volume,

### Par ailleurs, il contient 0.1 à 0.3 % en volume d'oxygène

### Obtention d'un mélange homogène de poudres

Un mélange homogène de poudres, c'est à dire dans lequel une majorité des microparticules de métal sont chacune entourée de nanoparticules de céramique, sans agrégats de ces particules de céramiques, est obtenu en mélangeant ces poudres dans les proportions indiquées au sein d'un mélangeur ou blendeur, et en les y soumettant à une agitation tridimensionnelle durant 45 min à 10 heures avec une fréquence d'agitation aléatoire en continu ou interrompue jusqu'à l'obtention d'un mélange homogène stable dans le sens où l'agencement de nanoparticules de céramiques entourant les particules microscopiques de métal perdure, en l'absence d'oxygène. Par exemple, le mélangeur préféré pour cette opération est un appareil dénommé Turbulat^{®}.

### Fabrication additive de l'alliage selon l'invention

La fabrication additive de pièces bi-composant métal/céramique par SLM, implique d'importantes contraintes thermiques dues à un chauffage localisé par le laser et des changements de phase générant des microstructures hétérogènes. Les matériaux ductiles, à haute conductivité thermique et à haute ténacité se comportent beaucoup mieux avec le procédé SLM, les matériaux céramiques auront tendance à se fissurer si le refroidissement n'est pas maitrisé

L'addition d'un matériau métallique à faible point de fusion en tant que liant peut être utilisée pour la fabrication additive de céramique, mais sans précaution particulière, seul le composant métallique entre en fusion constituant le réseau dense de la pièce, la céramique reste poreuse.

Pour pallier le problème de porosité et selon l'invention, le matériau métallique à faible point de fusion est à une échelle micrométrique et la céramique est à une échelle nanométrique. Cette précaution dans les granulométries différentes des deux types de poudre, permet d'obtenir une pièce fonctionnelle et dense, car est obtenue une fusion totale des éléments métalliques et des éléments céramiques.

Il est important que les deux types de poudres métalliques et céramiques selon l'invention soient fondus (et non frittés par exemple) car l'utilisation de grains frittés, de grains co-précipités ou de grains fondus détermine les propriétés du matériau final et pour les applications dans le domaine du biomédical, de l'aéronautique ou de l'automobile, les propriétés recherchées pour le matériau selon l'invention sont celles obtenues dans des grains fondus.

Les poudres micrométrique de métal et nanométrique de céramique sont mélangées dans des proportions particulières (5% de zircone et 95% de titane) avec un mélangeur Turbulat^{®} durant un temps d'agitation de 5 heures afin d'obtenir un mélange homogène où les nanoparticules de zircone viennent envelopper les microparticules de titane, formant ainsi une couche de zircone avantageusement répartie sur les particules de titane. Dans ce mode de réalisation et selon l'invention, le composant métallique à faible point de fusion entraine la fusion des nanoparticules de zircone.

Le mélange homogène des poudres de titane pur Ti ou d'un alliage Ti6Al4V avec des poudres nanométriques de ZrO₂/ Y₂O₃ est réalisé sous gaz inerte de type argon ou sous vide jusqu'à obtention d'un mélange homogène avec formation de pellicules dragéifiant les particules de titane avec ZrO₂/ Y₂O₃.

Selon l'invention, et pour atteindre une fusion totale d'un mélange de poudres métalliques et de poudres céramiques de type zircone Yttriée (YSZ), le mélange est fusionné par une concentration d'une source d'énergie de type laser fibre ytterbium, CO₂ ou plasma.

Plus précisément, le matériau selon l'invention est réalisé lors de la mise en forme de l'objet par fabrication additive.

Ainsi, l'invention concerne le procédé de fabrication de ce nouveau matériau concomitamment à sa mise en forme, comportant les étapes successives suivantes :
A) préparation d'un fichier numérique d'une forme géométrique à réaliser, le dit fichier numérique est tranché virtuellement de (1) à (n) selon des épaisseurs appropriées par rapport à l'axe de construction Z.
B) préparation d'un mélange de titane pur ou d'un alliage de titane, zircone, oxyde d'yttrium (Ti/ ZrO₂/ Y₂O₃)
C) mise sous argon d'une chambre de fusion laser
D) mise en chauffe d'un substrat ou plaque en titane température minimale 200°C température maximale 1500°C
E) dépôt d'une première couche du mélange Ti/ ZrO₂/ Y₂O₃sur un substrat ou une plaque en titane selon l'étape C), l'épaisseur du lit de poudre est inférieure à 50µm et supérieure à 5µm
F) Une source d'énergie focalisée vient fusionner sélectivement une partie du lit de poudre selon le tranchage décrit en étape A)
G) Les étapes E) et F) sont exécutées« n » fois où (n) représente le nombre de couches de la forme à réaliser.

### Précautions particulières

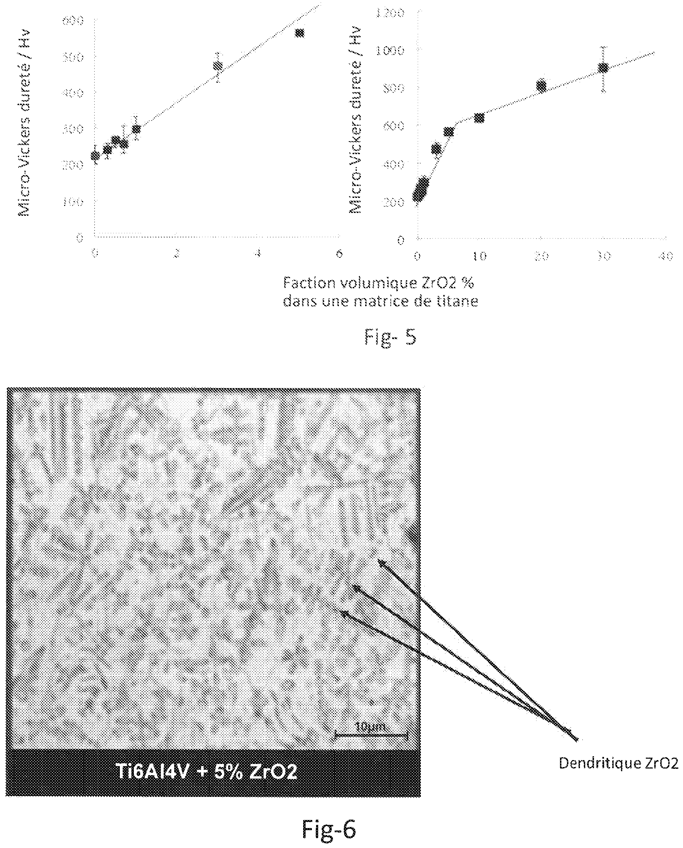

Lors du processus de fusion, une partie des atomes d'oxygène réagit avec le titane pour former de l'oxyde de titane TiO₂, qui peut contribuer à l'amélioration de la dureté de la phase du titane comme indiqué dans la courbe en (fig. 5). En effet, la dureté augmente considérablement avec l'augmentation de la teneur en ZrO₂ jusqu'à 1 vol. %. La résistance à la compression des composites peut augmenter de façon similaire à la dureté. Même une très faible quantité de ZrO₂ contribue à la formation d'oxyde de titane, ce qui conduit à une amélioration de la dureté de l'alliage interactif Ti/ZrO₂.

Afin de limiter la concentration en oxygène lors de la fusion, le temps d'exposition du spot du laser dans la zone de fusion (titane en phase liquide) ne dépasse pas les 5 secondes, avantageusement le temps d'exposition soit inférieur à 1 seconde comme indiqué dans la courbe en fig-4.

La concentration d'oxygène reste faible jusqu'à 9.5 µm de profondeur du spot laser comme indiqué dans la courbe en (fig-3), le point d'inflexion est à 10 µm du spot du laser, au-delà de cette épaisseur du lit de poudre l'augmentation du taux d'oxygène est exponentielle.

La profondeur du spot laser (1-1) correspond à l'épaisseur du lit de poudre (1-4) où la fusion des matériaux mis en réaction est totale. Le rayonnement de l'énergie focalisée (1-2) sur un point de fusion est absorbé en grande partie par les matériaux en réaction(titane, zircone) (1-3). Du fait que la poudre de titane est à l'échelle micrométrique enrobée de poudre de zircone à une échelle nanométrique, le passage du grain de titane de la phase solide à la phase liquide entraine la fusion des grains de la zircone en sa surface. (1-3).

La fusion et la cohésion entre les points de fusions (2-3) dépend du spot et de la puissance du laser, dans un mode de réalisation avantageux le spot du laser (2-1) est compris entre 0.1mm et 0.2 mm et une puissance du laser de 400 W et encore avantageusement 1000W. La cohésion des points de fusion (2-3) dépend en grande partie de l'état (liquide, solide ou semi-solide) dans lequel se trouve le point de fusion lors dupasse du laser en mode direct ou en mode croisé. Les modes de passage du laser dépendent de la stratégie du parcours mise en œuvre pour scanner les surfaces.

La fusion titane-zircone est avantageusement réalisée avec un temps d'exposition du point de fusion unitaire inférieur à 1 seconde comme indiqué dans la courbe en (fig-4) et sur une épaisseur de couche du lit de poudre inférieure à 10µm comme indiqué dans la courbe en (fig-3)

Les propriétés mécaniques des matériaux composites Ti/ZrO₂ sont très affectées par la formation d'oxyde de titane dans la matrice de titane.

Le lit de poudre est maintenu à une température de 200 °C (2-6) dans ce mode de réalisation ou avantageusement 400°C, le préchauffage est assuré par une résistance électrique placée au niveau inférieur du substrat (2-4) du plateau de réalisation, avec un temps de détention de 50 secondes ou avantageusement 100 secondes, et la température de fusion sélectionnée est 1700 °C, ou avantageusement 1750 °C, ou avantageusement 1800 °C. La variation de la teneur en oxygène dans le mélange interactif Ti/ZrO₂ et l'épaisseur de la couche réactive sont deux paramètres étroitement liés.

Les épaisseurs de couches réactives varient avec le temps de maintien à des températures de fusion différentes de 1700°C, 1750°C ou 1800°C, la température de préchauffage étant fixée à 200 °C.

Avec l'augmentation du temps de fusion, l'oxygène diffuse dans le matériau en fusion et réagit avec le titane, de sorte que l'épaisseur de la couche réactive sur la face de Ti augmente progressivement.

La variation de l'épaisseur de la couche réactive peut être divisée en trois étapes: inoculation (0-1 s), augmentation linéaire (1-5 s) et augmentation parabolique (au bout de 5 s) (fig-3). Ceci parce que la réaction chimique entre Ti en phase liquide et ZrO₂ a lieu sous l'action globale de la température et de la concentration.

La plus haute température de fusion conduit à une teneur en oxygène plus élevée et une plus grande épaisseur de la couche réactive. La teneur en O augmente avec l'augmentation du temps de maintien du spot laser sur une zone de réaction. L'évolution de l'épaisseur de la couche réactive peut être divisée en trois étapes: inoculation (0-1 s), augmentation linéaire (1-5 s) et augmentation parabolique (au bout de 5 s).

### Définition d'une structure poreuse

Grâce à la technique de fabrication additive, le matériau selon l'invention peut être conçu et mis en forme dans le même temps avec non seulement une forme géométrique particulière, mais également une porosité spécifique si besoin.

La réalisation d'un objet d'une forme géométrique particulière et non poreux s'effectue en déplaçant la source d'énergie de façon à ce que les points de fusion formés se chevauchent dans les trois dimensions.

Pour générer au contraire une structure poreuse, on déplace la source d'énergie de façon à définir une multitude de cellules unitaires ou motifs unitaires tridimensionnelles et interconnectés.

La cellule de base ou cellule unitaire constitutive de la structure poreuse réalisée par empilement de couches, est de forme géométrique en trois dimensions (x,y,z), la cellule unitaire est formée par au moins trois arêtes avec une ouverture d'angle d'au moins 10°, telle un trièdre, et la cellule unitaire peut être de forme régulière ou irrégulier en forme de pyramide, tétraèdre, cubique, octaèdre, icosaèdre, dodécaèdre et sans limitation de forme. Dans un mode de réalisation préférentiel, la cellule unitaire sera de forme dodécaèdre renforcée.

Dans un autre mode de réalisation, la cellule unitaire est formée de 12 arêtes avec des angles d'ouverture des arêtes de 30° par rapport à l'axe vertical ou l'axe de construction. Les arêtes peuvent être régulières ou irrégulières selon la densité du maillage et la porosité voulue.

Ladite structure poreuse obtenue peut présenter une porosité comprise entre 30% et 80%, une taille des pores comprise entre 100 µm et 500 µm et une distribution des pores comprise entre 500 µm et 700 µm avec une inter connectivité totale. Dans un mode préférentiel la porosité comprise entre 60% et 70 %, la taille des pores comprise entre 200 µm et 300 µm avec une distribution de la porosité comprise entre 100 µm et 600 µm et une inter connectivité totale. Ses paramètres sont ainsi proches des caractéristiques de l'os humain dans la maxillaire et la mandibule.

Plusieurs formes de porosités peuvent être sélectionnées avec la possibilité de définir des zones de répartition des pores de différentes tailles.

### Processus possiblement impliqué dans la fusion

Pour réaliser la fusion il est important de comprendre l'interaction entre un alliage de titane et un matériau réfractaire de type céramique (Zircone). L'interaction du couple Ti/ZrO₂ est un processus multivarié, étroitement couplé, instable, non linéaire et non-équilibré. Le tableau suivant décrit tous les paramètres thermo-physiques du titane et de la zircone.

| | Ti | ZrO₂ |
|---|---|---|
| Densité (g/cm3) | 4,13 | 5,77 |
| Chaleur spécifique (J/(g.°C) | 0,5275 | 1,5 |
| Conductivité thermique (w/(cm.C°)) | 0,1704 | 6,8 × 10⁻⁵ |
| Temp de cristalisation (J/g) | 435,4 | - |
| Réaction à la chaleur (J/g) | 1,023 | - |
| Coefficient de diffusion d'oxygène (cm²/s) | 0,14 × 10^{-4x exp [-138000/RT]} | Dans le titane en fusion |
| | 0,33 × exp[-126000/RT] | Dans le titane en fusion dans sa phase beta β-Ti |
| Module d'Young | 110-140 Gpa | 200 Gpa |
| Résistance à la rupture | 850-900 Mpa | 600Mpa |
| Ténacité | 33-110 Mpa.m ^{1/2} | 7-13 Mpa.m^{1/2} |
| Allongement à la rupture (%) | 13-16% | - |
| Dureté Vickers (HV) | 290-350 | 1200 |
| Température de fusion | 1668°C | 2700°C |
| CTE (20-200°C) | 8,5 .10⁻⁶ /K | 10,5 .10⁻⁶ /K |

### Paramètres thermo-physiques du titane et la zircone

Dans un tel procédé, le transfert de quantité d'énergie, le transfert de chaleur, le transfert de masse et la réaction chimique interagissent les uns avec les autres de manière intensive. Par conséquent, il est nécessaire de bien comprendre la réaction du mélange interactif Ti/ZrO₂ pour la mise en œuvre d'un tel procédé. Ceci se traduit par la maitrise de la température de fusion du mélange interactif Ti/ZrO₂, le transfert de chaleur et de masse entre le titane en fusion et la zircone fondue. Une telle réaction est réactive, instable et variant avec le temps d'exposition à la fusion. En outre, la réaction chimique du mélange interactif Ti/ZrO₂ affecte la température du mélange et la concentration en oxygène.

Lorsque la concentration en zircone Zr augmente, le titane Ti réagit avec l'oxygène O et la zircone devient déficitaire en oxygène. La chaleur de la réaction élève la température du mélange et accélère la diffusion de Ti, O, Zr, ce qui augmente la concentration de Ti, O, Zr et accélère la réaction du mélange interactif Ti/ZrO₂ de nouveau, et formant ainsi une interaction intense entre le transfert de chaleur, le transfert de masse et la réaction chimique.

Les réactions chimiques entre Ti et ZrO₂ ne sont pas thermodynamiquement favorables, parce que les fonctions d'enthalpie libre Gde Gibbs des équations suivantes sont positives ou légèrement négatives à la température de fusion de 1700°C.

Ti + ZrO₂ ------> TiO + Zr + ½ O₂Δ G₁= 157,15 kcal/mol

Ti + ZrO₂ ------> TiO + ZrΔ G₂= 33,14 kcal/mol

2Ti + 3/2 ZrO₂ ------> Ti2O3 + 3/2Δ G₃= 0,42 kcal/mol

3Ti + 5/2 ZrO₂ ------> Ti3O5 + 5/2 ZrΔ G₄= 26,82 kcal/mol

Selon les réactions chimiques suivantes, le titane ne peut pas être un agent réducteur pour l'oxyde de zirconium. Par contre le titane peut réduire l'oxyde de zirconium à des températures élevées. L'existence des sous-oxydes de titane (Ti₂O, Ti₃O) et la déficiente en oxygène de la zircone (ZrO₂₋ₓ) conduit à la réduction totale de la zircone par le titane lors de la solidification.

Dans un mode de réalisation avantageux, la teneur en oxygène lors de la fusion du mélange interactif Ti/ZrO₂ est pratiquement nulle au cours de la première seconde de la fusion laser. Après 5 secondes, il y aune augmentation rapide de la teneur en oxygène, formant ainsi du dioxyde de titane TiO₂ en réagissant avec le titane.

En effet, la température de fusion du mélange interactif Ti/ZrO₂ (Titane en phase liquide) augmente à mesure que le temps d'exposition au laser est maintenu, ce qui conduit à l'activation du Zr et O et à l'augmentation de gradient de concentration. Pendant ce temps, en augmentant la température, les taux de Zr et O augmentent, ce qui induit à la diffusion de Ti, Zr et des oxydes de titane (Ti₂O, Ti₃O).

Par conséquent, en raison de la présence d'oxygène supplémentaire et Zr disponibles pour la réaction avec le titane, la réaction du mélange interactif Ti/ZrO₂ devient plus intensive, rappelons que la réaction du mélange interactif Ti/ZrO₂ n'est pas iso-thermique.

La chaleur libérée par la réaction augmente également la température localement et accélère la diffusion de l'oxygène. D'autre part, la diffusion de l'oxygène est accélérée à cause de son rayon atomique plus petit.

La température de fusion est un paramètre important qui influe sur la diffusion de l'oxygène. Afin d'améliorer la fluidité du titane lors de la réaction, il est nécessaire de préchauffer la chambre de réaction avant la fusion.

Lors du processus de fabrication, une partie des atomes d'oxygène réagit avec le titane Ti pour former de l'oxyde de titane (TiO₂), contribuant avantageusement à l'amélioration de la dureté de la phase Ti et par conséquent à l'amélioration des propriétés mécaniques des composites.

Les propriétés mécaniques du matériau composite Ti/ZrO₂ sont très affectées par la formation d'oxyde de titane dans la matrice de Titane.

La dureté augmente considérablement avec l'augmentation de la teneur en ZrO₂ jusqu'à 1 vol. % global, la résistance à la compression du composite Ti/ZrO₂ augmente de façon similaire à la dureté. Même une très faible quantité de ZrO₂ contribue à la formation d'oxyde de titane, ce qui conduit à une amélioration de la dureté ainsi que la fragilité du matériau composite Ti/ZrO₂ au-delà d'une certaine quantité.

Selon l'invention, la pièce issue de la chambre de fusion subit un traitement thermique sous azote selon lequel elle est introduite dans un four thermique métallique susceptible de monter jusqu'à 3000°C où de l'azote (N) est ajouté sous sa forme gazeuse dans des proportions comprise entre 5 et 10% sous une pression avantageusement comprise entre 10 et 12 bar et dans une plage de température comprise entre 850° et 1850°C, afin d'améliorer la contrainte de traction de 200 MPa à plus de 600 MPa en maintenant la même élasticité. Ce traitement thermique a pour but de donner une dureté supplémentaire en maintenant la même élasticité et en diminuant les tensions résiduelles entre les couches réalisées successivement de la pièce. Idéalement, le traitement thermique sous azote est réalisé à 11 00°C durant 45 minutes.

Sauf mention contraire, les teneurs indiquées le sont en pourcentage volumique du matériau.

## Revendications

1. Procédé de fabrication d'un matériau composite en alliage métallique et céramique, comprenant les étapes de :
i. préparation d'un mélange homogène de poudre métallique et de poudre céramique, la granulométrie de la poudre métallique étant micrométrique et la granulométrie de la poudre céramique étant nanométrique,
ii. exposition dudit mélange à une source d'énergie focalisée qui vient fusionner sélectivement une partie d'un lit dudit mélange de poudre,
dans lequel la poudre céramique est de la zircone stabilisée,
ledit procédé étant **caractérisé en ce que** ladite zircone est de type zircone yttriée avec une concentration d'oxyde d'Yttrium comprise entre 11 et 30% en volume de la zircone.

2. Procédé selon la revendication 1, dans lequel la poudre métallique comprend du titane pur ou un alliage en comprenant de type Ti6AIV4.

3. Procédé selon l'une des revendications précédentes dans lequel la granulométrie de la poudre métallique est comprise entre 5 et 50 microns et la granulométrie de la poudre céramique est comprise entre 5 et 250 nm.

4. Procédé selon l'une des revendications précédentes, dans lequel la source d'énergie focalisée est un spot laser.

5. Procédé selon l'une des revendications précédentes, dans lequel le temps d'exposition d'une zone de fusion est inférieur à 5 secondes.

6. Procédé selon l'une des revendications précédentes, dans lequel l'épaisseur du lit de poudre est comprise entre 5 et 50 microns.

7. Procédé selon l'une des revendications précédentes, dans lequel la température de fusion est supérieure à 1650°C.

8. Procédé selon l'une des revendications précédentes, dans lequel la proportion de poudre métallique est supérieure à 40% en volume et inférieure à 99,5% en volume.

9. Procédé selon l'une des revendications précédentes, dans lequel la proportion de poudre céramique est supérieure à 0.4% en volume et inférieure à 60% en volume.

10. Procédé selon l'une des revendications précédentes, étant un procédé de fabrication d'un objet d'une forme géométrique donnée, comprenant les étapes de :
i. en fonction de la forme géométrique à réaliser, préparation de tranches virtuelles de l'objet à réaliser d'épaisseur donnée suivant un axe de construction de l'objet,
ii. préparation d'un mélange homogène de poudre métallique et de poudre céramique, la granulométrie de la poudre métallique étant micrométrique et la granulométrie de la poudre céramique étant nanométrique,
iii. dépôt sur un substrat d'une couche du mélange de poudre d'une épaisseur correspondant à celle de la tranche de la forme géométrique à réaliser
iv. exposition dudit mélange de poudre de ladite première couche à une source d'énergie focalisée qui vient fusionner sélectivement une partie du lit dudit mélange de poudre aux emplacements correspondant à la tranche virtuelle à réaliser, par laquelle est obtenue une première tranche de la forme géométrique à réaliser, au sein de la première couche de mélange de poudre
v. dépôt d'une n-ième couche de mélange de poudre sur la couche précédente incluant la tranche de l'objet réalisée à l'étape précédente, et exposition de la n-ième couche à la source d'énergie focalisée pour obtenir une n-ième tranche de la forme géométrique à réaliser
vi. répétition de l'étape précédente jusqu'à l'obtention de la forme géométrique à réaliser.

11. Objet biocompatible, tel qu'un implant ou une prothèse, réalisé par la mise en oeuvre du procédé selon la revendication précédente.

12. Objet de l'industrie automobile ou aéronautique réalisé par la mise en oeuvre du procédé selon la revendication 10.

## Patentansprüche

1. Verfahren zum Herstellen eines Metalllegierung-Keramik-Verbundmaterials, umfassend die Schritte:
i. Herstellen einer homogenen Mischung aus Metallpulver und Keramikpulver, wobei die Partikelgröße des Metallpulvers mikrometrisch und die Partikelgröße des Keramikpulvers nanometrisch ist,
ii. Aussetzen der Mischung einer fokussierten Energiequelle, die selektiv einen Teil eines Betts der Pulvermischung schmilzt,
wobei das Keramikpulver stabilisiertes Zirkonoxid ist,
wobei das Verfahren **dadurch gekennzeichnet ist, dass** das Zirkonoxid vom Yttrium-Zirkonoxid-Typ mit einer Konzentration an Yttriumoxid zwischen 11 und 30 Vol.-% des Zirkonoxids ist.

2. Verfahren nach Anspruch 1, wobei das Metallpulver reines Titan oder eine dieses enthaltende Legierung vom Typ Ti6AIV4 umfasst.

3. Verfahren nach einem der vorhergehenden Ansprüche, wobei die Partikelgröße des Metallpulvers zwischen 5 und 50 µm beträgt und die Partikelgröße des Keramikpulvers zwischen 5 und 250 nm beträgt.

4. Verfahren nach einem der vorhergehenden Ansprüche, wobei die fokussierte Energiequelle ein Laserspot ist.

5. Verfahren nach einem der vorhergehenden Ansprüche, wobei die Aussetzungszeit einer Schmelzzone weniger als 5 Sekunden beträgt.

6. Verfahren nach einem der vorhergehenden Ansprüche, wobei die Dicke des Pulverbetts zwischen 5 und 50 µm beträgt.

7. Verfahren nach einem der vorhergehenden Ansprüche, wobei die Schmelztemperatur über 1650 °C beträgt.

8. Verfahren nach einem der vorhergehenden Ansprüche, wobei der Anteil an Metallpulver größer als 40 Vol.-% und kleiner als 99,5 Vol.-% ist.

9. Verfahren nach einem der vorhergehenden Ansprüche, wobei der Anteil an Keramikpulver größer als 0,4 Vol.-% und kleiner als 60 Vol.-% ist.

10. Verfahren nach einem der vorhergehenden Ansprüche, das ein Verfahren zum Herstellen eines Objekts einer gegebenen geometrischen Form ist, umfassend die folgenden Schritte:
i. abhängig von der zu fertigenden geometrischen Form, Anfertigen virtueller Abschnitte des zu fertigenden Objekts mit vorgegebener Dicke entlang einer Konstruktionsachse des Objekts,
ii. Anfertigen einer homogenen Mischung aus Metallpulver und Keramikpulver, wobei die Partikelgröße des Metallpulvers mikrometrisch und die Partikelgröße des Keramikpulvers nanometrisch ist,
iii. Aufbringen einer Schicht der Pulvermischung auf ein Substrat mit einer Dicke, die derjenigen des Abschnitts der zu fertigenden geometrischen Form entspricht,
iv. Aussetzen der Pulvermischung der ersten Schicht einer fokussierten Energiequelle, die selektiv einen Teil des Betts der Pulvermischung an den Stellen schmilzt, die dem zu fertigenden virtuellen Abschnitt entsprechen, wodurch ein erster Abschnitt der zu fertigenden geometrischen Form innerhalb der ersten Schicht der Pulvermischung erhalten wird,
v. Aufbringen einer n-ten Schicht aus Pulvermischung auf der vorherigen Schicht, einschließlich des Abschnitts des im vorherigen Schritt gefertigten Objekts, und Aussetzen der n-ten Schicht der fokussierten Energiequelle, um einen n-ten Abschnitt der zu fertigenden geometrischen Form zu erhalten,
vi. Wiederholen des vorherigen Schritts, bis die zu fertigende geometrische Form erhalten wird.

11. Biokompatibles Objekt, wie ein Implantat oder eine Prothese, gefertigt durch Ausführen des Verfahrens nach dem vorhergehenden Anspruch.

12. Objekt der Automobil- oder Luftfahrtindustrie, gefertigt durch Ausführen des Verfahrens nach Anspruch 10.

## Claims

1. Method for producing a composite material made of a metal-ceramic alloy, comprising the steps of:
i. preparing a homogeneous mixture of metal powder and ceramic powder, the particle size of the metal powder being micrometric and the particle size of the ceramic powder being nanometric,
ii. exposing said mixture to a focused energy source which selectively melts part of a bed of said powder mixture,
wherein the ceramic powder is stabilized zirconia,
said method being **characterized in that** said zirconia is yttria-stabilized zirconia with a concentration of yttrium oxide of between 11 and 30% by volume of the zirconia.

2. Method according to claim 1, wherein the metal powder comprises pure titanium or an alloy comprising it of the Ti6AIV4 type.

3. Method according to either of the preceding claims, wherein the particle size of the metal powder is between 5 and 50 microns and the particle size of the ceramic powder is between 5 and 250 nm.

4. Method according to any of the preceding claims, wherein the focused energy source is a laser spot.

5. Method according to any of the preceding claims, wherein the exposure time of a melting zone is less than 5 seconds.

6. Method according to any of the preceding claims, wherein the thickness of the powder bed is between 5 and 50 microns.

7. Method according to any of the preceding claims, wherein the melting temperature is above 1650°C.

8. Method according to any of the preceding claims, wherein the proportion of metal powder is greater than 40% by volume and less than 99.5% by volume.

9. Method according to any of the preceding claims, wherein the proportion of ceramic powder is greater than 0.4% by volume and less than 60% by volume.

10. Method according to any of the preceding claims, being a method for producing an object of a given geometric shape, comprising the steps of:
i. depending on the geometric shape to be produced, preparing virtual slices of the object to be produced with a given thickness along a construction axis of the object,
ii. preparing a homogeneous mixture of metal powder and ceramic powder, the particle size of the metal powder being micrometric and the particle size of the ceramic powder being nanometric,
iii. depositing, on a substrate, a layer of the powder mixture with a thickness corresponding to that of the slice of the geometric shape to be produced
iv. exposing said powder mixture of said first layer to a focused energy source which selectively melts part of the bed of said powder mixture at the locations corresponding to the virtual slice to be produced, whereby a first slice of the geometric shape to be produced is obtained, within the first layer of powder mixture
v. depositing an nth layer of powder mixture on the previous layer including the slice of the object produced in the previous step, and exposing the nth layer to the focused energy source to obtain an nth slice of the geometric shape to be produced
vi. repeating the previous step until the geometric shape to be produced is obtained.

11. Biocompatible object, such as an implant or a prosthesis, produced by implementing the method according to the preceding claim.

12. Object for the automotive or aeronautical industry produced by implementing the method according to claim 10.
